# EUROPEAN PATENT APPLICATION

(11) **EP 4 838 808 A1**
(43) Date of publication of application: **11.11.2026**
(21) Application number: 25175561.7
(22) Date of filing: 09.05.2025
(51) Int. Cl.: H04B 7/185, H04B 7/204, H04W 52/02, H04W 84/06

(54) **MONITORING SIGNALS IN A WIRELESS COMMUNICATION SYSTEM COMPRISING A NON-TERRESTRIAL NETWORK**

(71) Applicant: Nokia Technologies Oy, 02610 Espoo (FI)
(72) Inventor: WIGARD, Jeroen, 9270 Klarup (DK); MEDEIROS DE AMORIM, Rafhael, 9000 Aalborg (DK); LASELVA, Daniela, 9270 Klarup (DK); BUTHLER, Jakob Lindbjerg, 9000 Aalborg (DK); FREDERIKSEN, Frank, 9270 Klarup (DK)
(74) Representative: Richardt Patentanwälte PartG mbB

(57) **Abstract**

The present subject matter relates to a method receiving from a non-terrestrial network node of a wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, determining, based on the activity pattern, an apparatus switching schedule that indicates one or more of: monitoring signals from the non-terrestrial network node or enabling a sleep mode in the apparatus; and during the at least one shared period, performing in accordance with the apparatus switching schedule one or more of: monitoring the signals from the non-terrestrial network node or enabling the sleep mode in the apparatus.

## Description

### Technical Field

Various example embodiments relate to telecommunication systems, and more particularly to an apparatus for monitoring signals in a wireless communication system comprising a non-terrestrial network.

### Background

In wireless communication systems, network nodes communicate with user devices through wireless signals transmitted over a coverage area. In certain network deployments, particularly those involving non-terrestrial components, it may become necessary to manage the availability of communication resources over time and space in an efficient manner.

### Summary

According to some aspects, there is provided the subject matter of the independent claims. Some further aspects are defined in the dependent claims.

### Brief Description of the Drawings

The accompanying figures are included to provide a further understanding of examples, and are incorporated in and constitute part of this specification. In the figures:
FIG. 1 illustrates a wireless communication system comprising a non-terrestrial network (NTN) architecture according to an example of the present subject matter;
FIG. 2 illustrates a wireless communication system comprising an NTN architecture according to an example of the present subject matter;
FIG. 3 is a flowchart of a method for monitoring signals in a wireless communication system comprising an NTN in accordance with an example of the present subject matter;
FIG. 4 is a flowchart of a method for monitoring signals in a wireless communication system comprising an NTN in accordance with an example of the present subject matter;
FIG. 5 is a flowchart of a method for monitoring signals in a wireless communication system comprising an NTN in accordance with an example of the present subject matter;
FIG. 6 is a flowchart of a method for monitoring signals in a wireless communication system comprising an NTN in accordance with an example of the present subject matter;
FIG. 7 illustrates a signaling procedure between a network node, such as a gNB, and a user equipment according to an example of the present subject matter;
FIG. 8 illustrates a signaling procedure between a network node, such as a gNB, and a user equipment according to an example of the present subject matter;
FIG. 9 illustrates a procedure for the user equipment to select one or more beam configurations according to an example of the present subject matter;
FIG. 10 illustrates a time-multiplexed beam configuration in a wireless communication system comprising an NTN according to an example of the present subject matter; and
FIG. 11 is a block diagram showing an example of an apparatus according to an example of the present subject matter.

### Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may enable an apparatus to dynamically adapt its communication behavior in response to structured configuration information provided by a non-terrestrial network. By facilitating the definition and use of configurable shared periods the present subject matter may allow the apparatus to optimize its monitoring and low-power operation based on the activity pattern of beams. As a result, the present subject matter may support improved energy efficiency through selective entry into sleep modes and enable a flexible scheduling framework for communication opportunities, particularly beneficial in scenarios where synchronization signals are transmitted at extended periodicities.

An apparatus for a wireless communication system may be provided. The wireless communication system may comprise a non-terrestrial network. The wireless communication system comprises nodes such as base stations, wherein each node may serve devices located within the node's geographical area of service. The wireless communication system may support one or more radio access technologies (RATs). The one or more radio access technologies may support the non-terrestrial network. A radio access technology of the radio access technologies may, for example, be evolved universal terrestrial radio access (E-UTRA), Fifth-generation wireless network (5G) new radio (NR), or a Sixth-generation wireless network (6G) based system, but it is not limited thereto, and a person skilled in the art may apply the present subject matter to other wireless communication systems provided with necessary properties. The device may refer to an equipment that connects to and communicates with the wireless communication system to access services and applications provided by the wireless communication system. The device may, for example, comprise any one of: a mobile phone, a tablet, an Internet of things (IoT) device, or a laptop.

The wireless communication system may thus enable to integrate non-terrestrial communication segments, such that communication between devices and the radio access network may occur through non-terrestrial platforms, including, for example, satellites.

In one example implementation, the apparatus may be within a non-terrestrial network cell and may initially detect a wide beam from a network node that may cover the non-terrestrial network cell during a full-cell active interval in which the wide beam is configured to be active. The wide beam may be used by the network node to transmit synchronization signals, such as synchronization signal blocks (SSBs), thereby enabling the apparatus to achieve time and frequency synchronization. Upon successful synchronization, the apparatus may be assigned to one of a set of narrow beams that spatially partition the cell, for example through signaling provided in a system information block (SIB) or other common control message. During a subsequent guaranteed communication interval associated with the set of narrower beams, the apparatus may initiate and complete a random access procedure, enabling a transition to a connected state. The apparatus may, for example, receive configuration information through the assigned narrow beam from the network node, which may include or refer to an activity pattern defining, for each beam in the set of beams, its respective activation status over a shared period. The activity pattern may, for example, define active and inactive time intervals for each beam of the set of beams within the shared period. The apparatus may utilize the activity pattern corresponding to the assigned narrow beam to derive an apparatus switching schedule, which defines, over the shared period, an operational mode of the apparatus. This may include, for example, a mode in which the apparatus may monitor signals from the network node or a mode in which the apparatus may enter a sleep mode to reduce power consumption. Thus, during the shared period, the apparatus may perform monitoring operations, such as receiving downlink control or scheduling information, when the assigned narrow beam is active, and may suspend such monitoring and enter a sleep mode when the assigned narrow beam is inactive. Each shared period may correspond to or be associated with or be part of a respective SSB period. The SSB period may consist of the shared period and a first-type interval that may consist of the full-cell active interval and the subsequent guaranteed communication interval. Synchronization and initial access procedures may use specific beams for control signaling, with the first-type interval preceding and defining the boundaries of the shared period. This setup may allow precise timing of the shared period, enabling the apparatus to align its monitoring and sleep patterns with beam activity, thereby reducing unnecessary signal processing and conserving energy.

The apparatus may be configured to receive configuration information from a network node of the wireless communication system. The configuration information may be indicative of an activity pattern of a set of beams. The network node may be non-terrestrial network node. The non-terrestrial network node may be part of the non-terrestrial network. The non-terrestrial network node may, for example, comprise a satellite-based node. The satellite-based node may be implemented as either a transparent satellite node with a bent-pipe payload or a regenerative satellite node with onboard processing functionality. The reception of the configuration information from the non-terrestrial network node may be controlled or triggered by a component of the wireless communication system, such as a core network or terrestrial network node, which may, for example, initiate or manage the signaling through interface protocols.

The generation of the beam may enable a communication of signals using the beam. A beam may refer to a directional radiation pattern that concentrates radio frequency (RF) signals over a defined coverage area. This directional radiation pattern may result from focusing of the RF transmission in a specific direction. To achieve this, signal parameters such as the phase and amplitude of the RF signal fed to individual antenna ports may be adjusted accordingly for each beam. Accordingly, each beam may be defined by a set of parameters, referred to as beam parameters. The beam parameters may comprise the antenna configuration (e.g., antenna ports), transmission direction, and beamforming characteristics used to shape the RF signals in order to focus the transmission toward the defined coverage area of the beam.

The set of beams may refer to a defined set of beams. The activity pattern of the set of beams may comprise an activity pattern per beam of the set of beams. Alternatively, the activity pattern may comprise an activity pattern per subset of the set of beams, wherein the subsets of beams may be predefined, dynamically determined, or based on spatial or functional grouping. Alternatively, the activity pattern may apply to the entire set of beams. The first option, an activity pattern per beam, may be advantageous in scenarios requiring fine-grained control, because it may allow individual activation statuses to be defined separately for each beam. The second option, an activity pattern per subset of beams, may be advantageous in reducing signaling overhead, because multiple beams may share a common activity behavior based on their grouping. The third option, an activity pattern for the entire set of beams, may be advantageous in cases where uniform behavior across all beams may be sufficient or desirable, thereby minimizing complexity in configuration and interpretation.

Each beam of the set of beams may be associated with an activation status for a respective specific timing, indicating that the beam is active (i.e., in an active status) in the sense that the beam may be used for communication during that specific timing, or inactive (i.e., in an inactive status) in the sense that the beam may not be used for communication during that specific timing. Hence, whenever an activation status is referred to, it is to be understood as being associated with a specific timing, and thus the activation status may be considered valid for that specific timing. The specific timing associated with an active status of a beam may be referred to as an active period of the beam, and the specific timing associated with an inactive status of the beam may be referred to as an inactive period of the beam.

The configuration information is applicable for at least one period. Each period of the at least one period may refer to a predefined or configurable time interval. The configuration information being applicable for the at least one period may mean that the activity pattern is valid for that at least one period.

The at least one period may be shared between the set of beams for sending signals (referred to as set of signals) according to the activity pattern of the set of beams, and thus referred to as the at least one shared period. That is, for example, each beam of the set of the set of beams may be used by the non-terrestrial network node for sending signals during the at least one shared period. Sending signals of the set of signals in accordance with the activity pattern of a given beam may comprise, in the case where one or more active statuses are defined for that beam, sending signals during the specific timings associated with the respective active statuses using that beam.

During each shared period, each beam of the set of beams is configured to have at least one inactive period. That is, each beam may have at least one inactive period. Indeed, the operation of each beam of the set of beams may not be strictly required to be continuous or uninterrupted; instead, the beam may be allowed to remain unused for communication during one or more inactive periods within the at least one shared period. For example, each shared period of the at least one shared period may be defined such that, during the shared period, each beam of the set of beams may be allowed to be in an inactive status. This may be in contrast to other periods during which service of the wireless communication system must be guaranteed, and during such periods, each beam may be required to remain in an active status to ensure service availability. The at least one shared period may thus serve as a common temporal framework shared among the set of beams, during which each beam may be configured to either be used or not used for communication of signals based on its assigned activation status(es) in the activity pattern.

The activity pattern may indicate inactive periods of the set of beams over (i.e., during) the at least one shared period, where the inactive periods may refer to portions of the at least one shared period during which one or more beams of the set of beams may be intended not to be used for communication. For example, the activity pattern indicates inactive periods of the set of beams, over the at least one shared period, within a non-terrestrial network cell of the non-terrestrial network. The non-terrestrial network cell may refer to the coverage area served by the set of beams of the non-terrestrial network node. By defining inactive periods per beam within such a cell, the activity pattern may enable precise temporal control over beam operation. The activity pattern may, for example, indicate inactive periods and active periods of the set of beams during the at least one shared period.

For example, the activity pattern of the set of beams may indicate, for each beam of the set of beams, one or more activation statuses, wherein the active periods of the set of beams may represent the timing associated with active statuses of the set of beams and the inactive periods may represent the timing associated with inactive statuses of the set of beams. The activity pattern of the set of beams over each shared period of the at least one shared period may be referred to as shared period on/off pattern.

The activity pattern may, for example, be defined at (e.g., the RAN of) the wireless communication system based on system-level constraints, such as hardware limitations and power budgets of non-terrestrial network nodes. In particular, in the context of downlink coverage enhancement for non-terrestrial networks, the activity pattern may be determined in view of satellite-specific limitations, including constraints on total transmit power and the number of available transmitter/receiver (TRX) chains. These constraints may prevent the simultaneous activation of all beams within a satellite footprint, thereby requiring time-multiplexed or selectively enabled communication over subsets of beams. Accordingly, the activity pattern for the shared period may, for example, define a mapping between sub-periods within the shared period and beam activation statuses. Each sub-period may be assigned to one or more beams of the set beams, such that only the assigned beams may be active during their assigned sub-periods, while other beams are inactive during those sub-periods. For example, beam A may be active in the first sub-period, beam B in the second sub-period, beams C and D in the third sub-period, and no beam may be active in the fourth sub-period.

If the at least one shared period comprises multiple shared periods, the shared periods may be separated from one another, with each shared period associated with a respective timeframe, such that the timeframes are non-continuous and may include temporal gaps between consecutive shared periods.

The apparatus may be configured to determine, based on the activity pattern, an apparatus switching schedule that indicates one or more of: monitoring signals from the non-terrestrial network node or enabling a sleep mode in the apparatus. Enabling the sleep mode means allowing the apparatus to go into the sleep mode and stop monitoring activities for the duration of the inactive period. It is to be noted that when enabling a sleep mode in the apparatus, this does not enforce the apparatus to enter a sleep mode specifically, but rather releases the apparatus from actively monitoring signals and activity from the network.

For example, the apparatus may be configured to determine, based on the activity pattern, the apparatus switching schedule that indicates at least one of the following: monitoring signals from the non-terrestrial network node or enabling the sleep mode in the apparatus. The apparatus switching schedule may be a schedule. The apparatus switching schedule may define the timing for switching between different operational modes by the apparatus. The operational mode of the apparatus may refer to a state of operation in which the apparatus either enables or does not enable monitoring of signals from the non-terrestrial network node. The operational mode in which monitoring is not enabled may be referred to as the sleep mode. The operational mode in which monitoring is enabled may be referred to as a wake-up mode. The sleep mode may refer to a state in which monitoring functions, and optionally other functions, are switched off, while allowing the apparatus to reactivate monitoring (switch to the wake-up mode) according to the apparatus switching schedule when needed. The apparatus switching schedule may comprise an indication of periods during which the apparatus operates in the sleep mode and periods during which the apparatus operates in the wake-up mode. The monitoring of signals from the network node may be performed during the wake-up mode of operation of the apparatus, while monitoring may be suspended or disabled during the sleep mode to conserve energy.

For example, the apparatus may be configured to perform the monitoring of signals on a selected beam of the set of beams and use the timing information defined within the activity pattern, corresponding to the selected beam, to derive the apparatus switching schedule. In one example, the apparatus switching schedule may comprise a pattern of sleep and wake-up modes. The pattern of sleep and wake-up modes may correspond on a one-to-one basis with the activity pattern of the selected beam, meaning that the apparatus may enter a wake-up mode during the active periods of the selected beam and a sleep mode during its inactive periods. Alternatively, the apparatus switching schedule may be derived from the activity pattern of the selected beam based on additional criteria, such as overlapping timing windows with neighboring beams, required measurement periods, or predefined constraints.

The apparatus may be configured to during the at least one shared period, perform in accordance with the apparatus switching schedule one or more of: monitoring the signals from the non-terrestrial network node or enabling the sleep mode in the apparatus.

For example, the apparatus may be configured to during the at least one shared period, perform in accordance with the apparatus switching schedule at least one of the following: monitoring the signals from the non-terrestrial network node or enabling the sleep mode in the apparatus. The signals received by the apparatus from the non-terrestrial network node may be a subset of the set of signals because the apparatus may receive only the signals associated with one beam depending on its current reception capability or configuration. The monitoring based on the activity pattern may mean that the apparatus may attempt to detect and process, for the associated beam, the signals expected to be transmitted during the active period(s) associated with that beam. For example, the activity pattern may be provided in the form of a data structure. The apparatus may parse the data structure to identify, for the selected beam, one or more time intervals during which the selected beam is marked as active or inactive. The apparatus may then compare its current system time to the defined time intervals and determine, based on this comparison, the apparatus switching schedule. The apparatus switching schedule may indicate when the apparatus should transition to a sleep mode, during intervals where the selected beam is inactive, and when it should remain or return to a wake-up mode. During the wake-up mode, the apparatus may perform signal monitoring, which may include, for example, tuning its receiver in accordance with the transmission parameters (e.g., frequency, timing, beam index) of the selected beam to enable reception of signals from the network node.

In one example, the apparatus may be a user equipment or any other device of the wireless communication system.

Each shared period of the at least one shared period is provided per synchronization signal block (SSB) period. For example, each shared period of the at least one shared period is included in or part of a corresponding SSB period.

The SSB period may refer to a SSB transmission period. The SSB transmission period may refer to a recurring time interval associated with SSB transmissions. Each SSB transmission may provide an opportunity to the apparatus to perform cell search, synchronization, and initial access procedures. Defining each shared period based on the SSB period may ensure that the timing structure for beam activity and configuration delivery may remain aligned with the fundamental synchronization framework of the wireless communication system. This alignment may enable predictable timing for both synchronization operations and the management of beam activity patterns, facilitating efficient planning of apparatus monitoring behavior.

For example, each shared period may correspond to a portion of a corresponding SSB period. If the at least one shared period comprises multiple shared periods, the associated SSB periods may be consecutive.

According to one example, the set of beams comprises a serving beam of the apparatus, wherein the apparatus is configured to determine the apparatus switching schedule in accordance with the activity pattern of the serving beam.

The serving beam may refer to the beam currently associated with or selected by the apparatus for communication with the non-terrestrial network node, such as for receiving control information, synchronization signals, or data.

According to one example, the apparatus may be configured to receive the configuration information, during the at least one shared period, via the serving beam.

Receiving the configuration information via or through the serving beam may involve generating a RF signal that carries the configuration information and transmitting the RF signal by the non-terrestrial network node according to the beam parameters of the serving beam, including, for example, its spatial orientation, beamforming parameters, and coverage properties. The reception of the configuration information during the at least one shared period may comprise the reception of the configuration information within a time window, required for completing the reception, inside the at least one shared period.

Receiving configuration information via the serving beam may improve communication reliability by utilizing a beam that may already provide stable and high-quality connectivity to the apparatus, for reducing the risk of reception errors.

According to one example, the set of beams comprises beams for transmission of the SSB, wherein each SSB beam is associated with an index. The beam used for transmission of SSB may be referred to as SSB beam.

Associating each SSB beam with an index may allow for systematic identification and management of beams, enabling user equipment to detect, select, and track beams efficiently based on the received synchronization signals. This indexing structure may support scalable beam management, particularly important when multiple beams are deployed to cover wide areas.

According to one example, the apparatus may be configured to: synchronize with the non-terrestrial network in accordance with an SSB beam of the SSB beams, wherein the configuration information is received in accordance with the SSB beam during the synchronization.

Synchronization may refer to the process by which the apparatus aligns its timing and frequency references with the non-terrestrial network or with the wirelss communication system, using reference signals transmitted through a specific SSB beam. Receiving configuration information in accordance with the same SSB beam may streamline the initial access procedure and reduce signaling complexity, because both synchronization and configuration may be managed along the same spatial and temporal path. This approach may improve robustness particularly in NTN environments with large coverage areas and dynamic beam management. This approach may ensure that all UEs in the NTN cell may be aware in advance of scheduling operations and enabling the performance of measurements or operations within the beam or neighboring beams.

According to one example, the apparatus may be configured to transmit data during the at least one shared period based on the apparatus switching schedule.

While the schedule may be applied to govern downlink signal monitoring or reception, in this example, the schedule may enable to manage uplink data transmissions. This may ensure that data transmission is aligned with the temporal availability of active beams, avoiding uplink attempts during inactive periods and thereby reducing the risk of failed transmissions.

According to one example, the apparatus may be configured to: in response to determining that a SSB measurement is scheduled within the at least one shared period and that the SSB measurement and the monitoring cannot be performed simultaneously, determine whether to prioritize the SSB measurement or the monitoring. The SSB measurement may for example be of another cell than the cell where the apparatus is being served.

According to one example, wherein the apparatus is configured to prioritize the SSB measurement in response to determining that an execution criterion is fulfilled, and to otherwise refrain from executing the SSB measurement; the execution criterion being at least one of the following: more than a configured time has elapsed since a last SSB measurement, or a certain number of previous SSB measurements were refrained from. Refraining from executing the SSB measurement may comprise prioritizing the monitoring.

According to one example, the apparatus may be configured to: receive from the non-terrestrial network node a further configuration information indicative of an activity pattern of the set of beams or of another set of beams, the further configuration information being applicable for one or more shared periods subsequent to the at least one shared period, and monitor, during the one or more shared periods, signals form the non-terrestrial network node based on the activity pattern indicated by the further configuration information.

The monitoring of the signals from the non-terrestrial network node based on the activity pattern indicated by the further configuration information may comprise the determination of another apparatus switching schedule that indicates one or more of: monitoring signals from the non-terrestrial network node or switching the apparatus to a sleep mode and during the one or more shared periods perform in accordance with the another apparatus switching schedule one or more of: monitoring the signals from the non-terrestrial network node or switching the apparatus to the sleep mode.

In this context, the further configuration information may enable dynamic updating of beam activity patterns. This may be particularly beneficial in non-terrestrial networks, where beam activity may vary spatially and temporally.

According to one example, the at least one shared period comprises any shared period between the reception of the configuration information and a reception of subsequent configuration information.

Each shared period of the at least one shared period following the reception of the configuration information may represent the timeframe during which the received configuration remains valid. The shared period may persist until updated configuration information is received, ensuring that the apparatus has guidance for operation without requiring frequent reconfiguration. For example, if the time between the reception of the configuration information and the reception of subsequent configuration information corresponds to n SSB periods, then the at least one shared period may comprise n shared periods, each respectively associated with one of the n SSB periods.

This example may reduce unnecessary signaling overhead and maintain operational predictability for the apparatus. It may further support scalable management of a large number of devices where frequent reconfiguration may not be practical.

According to one example, the at least one shared period comprises an upcoming sequence of a defined number of shared periods.

The upcoming sequence may refer to a predetermined set of consecutive shared periods that are valid following the reception of configuration information. The defined number may be preconfigured or dynamically provided, specifying how many future shared periods are covered by the current configuration. For example, the sequence may correspond to n upcoming SSB periods, with each shared period being associated with one of the SSB periods. Defining the upcoming shared periods as a sequence may allow the apparatus to plan its operations over multiple periods in advance, without needing to await additional signaling after each individual period. This may enhance energy management through efficient sleep and wake-up mode scheduling across several periods.

According to one example, the apparatus may be configured to: receive the configuration information in one or more messages, wherein each message comprises a radio resource control (RRC) configuration message or a medium access control (MAC) message.

Supporting reception through either RRC or MAC messages may allow flexible control granularity: RRC signaling may be used for infrequent but substantial configuration updates, while MAC signaling may enable lightweight and efficient updates. This dual-layer signaling approach may allow the apparatus to maintain both robust long-term configuration and responsive short-term adjustments.

According to one example, the configuration information comprises at least one of the following: a configuration indicative of the activity pattern of the set of beams or a configuration index identifying the configuration from a set of configurations. In the latter case, the set of configurations may, for example, be provided to the apparatus through RRC signaling or may be pre-configured. If the set of configurations is pre-configured, less signaling may be needed, because only the configuration index may need to be transmitted. The set of configurations may be stored at the apparatus for selection based on the received configuration index.

The configuration indicative of the activity pattern may refer to explicit information defining the active or inactive statuses of the set of beams during at least one shared period, for example, by specifying beam-specific activity schedules or time segment assignments. Alternatively, the configuration information may comprise a configuration index that identifies, by reference, one configuration from a previously provided or preconfigured set of configurations. For example, detailed activity patterns may be provided explicitly when needed, or, when multiple predefined patterns are available, and only a lightweight index may need to be transmitted.

This example may minimize signaling overhead and reduce the time required for the apparatus to adapt its operational behavior. Furthermore, using an index-based approach may simplify apparatus implementation by allowing the storage and quick retrieval of configurations, for improving responsiveness and robustness in dynamic network environments.

According to one example, the apparatus may be configured to receive the set of configurations in an RRC configuration message and receive the configuration index in a MAC message.

Receiving the set of configurations via an RRC configuration message may enable to obtain multiple predefined configuration options through higher-layer signaling, which may be suited for relatively static configuration that may govern longer-term behavior of the apparatus. Receiving the configuration index via a MAC message may enable to obtain a selection reference among the predefined configurations through lower-layer signaling, which may be more dynamic and responsive to short-term changes in network conditions. This separation between the reception of the set of configurations and the reception of the configuration index may allow the apparatus to store the set of configurations once and efficiently adapt its operation thereafter by receiving lightweight signaling containing only the index.

According to one example, the configuration information comprises a bitmap indicative of the activity pattern, for each beam of the set of beams, during the at least one shared period.

For example, the activity pattern of the set of beams may comprise an activity pattern of each beam of the set of beams, where the bitmap may represent the temporal activation status (e.g., active or inactive) of each beam across time intervals within the at least one shared period. The bitmap may represent a compact mapping between beams and their active periods within the at least one shared period. Each bit of the bitmap may, for example, correspond to a specific beam and indicate whether the beam is associated with an active period or an inactive period during the at least one shared period.

The use of a bitmap to represent the activity pattern of the set of beams over the at least one shared period may offer a compact, structured, and scalable mechanism for conveying temporal beam usage information to an apparatus. This may enable the apparatus to determine its monitoring or transmission behavior efficiently without requiring verbose signaling formats. This format may support low-overhead configuration signaling, reduce control-plane burden, and enable fine-grained scheduling across multiple beams and time segments. Furthermore, the bitmap structure may be well-suited to both dynamic and semi-static scenarios, allowing updates to beam activity with minimal resource consumption, which may be especially advantageous in non-terrestrial networks where signaling opportunities may be limited.

According to one example, the configuration information comprises a set of time segments in which the at least one shared period is divided, wherein the activity pattern defines an assignment of each time segment of the set of time segments as an active period to one or more beams of the set of beams, wherein the set of beams cover the non-terrestrial network cell of the non-terrestrial network.

The set of beams denotes multiple such beams that are individually or collectively configured to transmit signals over portions of the NTN cell, and together they may ensure complete coverage of the entire non-terrestrial network cell. Each beam may, for example, serve a specific spatial region (or footprint), and in aggregation, the set of beams may define the radio coverage area accessible to user equipment (UEs) within that NTN cell.

The set of time segments may refer to a partitioning of the at least one shared period into discrete temporal intervals, each of which may be individually assigned to beams for communication. The activity pattern may define, for each time segment, which one or more beams of the set of beams are active, thereby enabling fine-grained temporal control over beam activity across the at least one shared period.

Assigning time segments to one or more beams may allow dynamic and flexible scheduling of beam operations, which can be adapted based on network demands, user distribution, or system optimization strategies. This structure may enable efficient load balancing by temporally distributing beam activity. This approach may be particularly advantageous in non-terrestrial networks, where flexible management of beams may be critical to addressing large coverage areas, variable propagation conditions, and constrained transmission resources.

According to one example, the apparatus may be configured to be in an RRC connected state during the at least one shared period.

According to one example, the apparatus may be configured to receive the configuration information via a beam-level Radio Network Temporary Identifier (RNTI), wherein the beam-level RNTI is common to all apparatuses associated to a beam in the non-terrestrial network cell.

According to one example, the signals from the non-terrestrial network node include at least one of the following: SSB signals, physical downlink control channel (PDCCH) signals, or reference signals.

Example embodiments provide an apparatus for a wireless communication system comprising a non-terrestrial network, NTN, the apparatus comprising at least one processor; and at least one memory storing instructions that, when executed by the at least one processor, cause the apparatus at least to: receive from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network; determine, based on the activity pattern, an apparatus switching schedule that indicates one or more of: monitoring signals from the non-terrestrial network node or enabling a sleep mode in the apparatus; and during the at least one shared period, perform in accordance with the apparatus switching schedule one or more of: monitoring the signals from the non-terrestrial network node or enabling the sleep mode in the apparatus.

Example embodiments provide an apparatus for a wireless communication system comprising a non-terrestrial network, NTN, the apparatus comprising: means for receiving from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network; means for determining, based on the activity pattern, an apparatus switching schedule that indicates one or more of: monitoring signals from the non-terrestrial network node or enabling a sleep mode in the apparatus; and means for during the at least one shared period, performing in accordance with the apparatus switching schedule one or more of: monitoring the signals from the non-terrestrial network node or enabling the sleep mode in the apparatus.

Example embodiments provide a method comprising: receiving from a non-terrestrial network node of a wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network; determining, based on the activity pattern, an apparatus switching schedule that indicates one or more of: monitoring signals from the non-terrestrial network node or enabling a sleep mode in the apparatus; and during the at least one shared period, performing in accordance with the apparatus switching schedule one or more of: monitoring the signals from the non-terrestrial network node or enabling the sleep mode in the apparatus.

Example embodiments provide an apparatus for a wireless communication system comprising a non-terrestrial network, NTN, the apparatus comprising at least one processor; and at least one memory storing instructions that, when executed by the at least one processor, cause the apparatus at least to: receive from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising at least one of: a configuration indicative of the activity pattern of the set of beams or a configuration index identifying the configuration from a set of configurations; determine, based on the activity pattern, an apparatus switching schedule that indicates one or more of: monitoring signals from the non-terrestrial network node or enabling a sleep mode in the apparatus; and during the at least one shared period, perform in accordance with the apparatus switching schedule one or more of: monitoring the signals from the non-terrestrial network node or enabling the sleep mode in the apparatus.

Example embodiments provide an apparatus for a wireless communication system comprising a non-terrestrial network, NTN, the apparatus comprising: means for receiving from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising at least one of: a configuration indicative of the activity pattern of the set of beams or a configuration index identifying the configuration from a set of configurations; means for determining, based on the activity pattern, an apparatus switching schedule that indicates one or more of: monitoring signals from the non-terrestrial network node or enabling a sleep mode in the apparatus; and means for during the at least one shared period, performing in accordance with the apparatus switching schedule one or more of: monitoring the signals from the non-terrestrial network node or enabling the sleep mode in the apparatus.

Example embodiments provide a method comprising: receiving from a non-terrestrial network node of a wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising at least one of: a configuration indicative of the activity pattern of the set of beams or a configuration index identifying the configuration from a set of configurations; determining, based on the activity pattern, an apparatus switching schedule that indicates one or more of: monitoring signals from the non-terrestrial network node or enabling a sleep mode in the apparatus; and during the at least one shared period, performing in accordance with the apparatus switching schedule one or more of: monitoring the signals from the non-terrestrial network node or enabling the sleep mode in the apparatus.

Example embodiments provide an apparatus for a wireless communication system comprising a non-terrestrial network, NTN, the apparatus comprising at least one processor; and at least one memory storing instructions that, when executed by the at least one processor, cause the apparatus at least to: receive from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a bitmap indicative of the activity pattern, for each beam of the set of beams, during the at least one shared period; determine, based on the activity pattern, an apparatus switching schedule that indicates one or more of: monitoring signals from the non-terrestrial network node or enabling a sleep mode in the apparatus; and during the at least one shared period, perform in accordance with the apparatus switching schedule one or more of: monitoring the signals from the non-terrestrial network node or enabling a sleep mode in the apparatus.

Example embodiments provide an apparatus for a wireless communication system comprising a non-terrestrial network, NTN, the apparatus comprising: means for receive from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a bitmap indicative of the activity pattern, for each beam of the set of beams, during the at least one shared period; means for determining, based on the activity pattern, an apparatus switching schedule that indicates one or more of: monitoring signals from the non-terrestrial network node or enabling a sleep mode in the apparatus; and means for during the at least one shared period, performing in accordance with the apparatus switching schedule one or more of: monitoring the signals from the non-terrestrial network node or enabling the sleep mode in the apparatus.

Example embodiments provide a method comprising: receiving from a non-terrestrial network node of a wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a bitmap indicative of the activity pattern, for each beam of the set of beams, during the at least one shared period; determining, based on the activity pattern, an apparatus switching schedule that indicates one or more of: monitoring signals from the non-terrestrial network node or enabling a sleep mode in the apparatus; and during the at least one shared period, performing in accordance with the apparatus switching schedule one or more of: monitoring the signals from the non-terrestrial network node or enabling the sleep mode in the apparatus.

Example embodiments provide an apparatus for a wireless communication system comprising a non-terrestrial network, NTN, the apparatus comprising at least one processor; and at least one memory storing instructions that, when executed by the at least one processor, cause the apparatus at least to: receive from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a set of time segments in which the at least one shared period is divided, wherein the activity pattern defines an assignment of each time segment of the set of time segments as an active period to one or more beams of the set of beams, wherein the set of beams cover the non-terrestrial network cell of the non-terrestrial network; determine, based on the activity pattern, an apparatus switching schedule that indicates one or more of: monitoring signals from the non-terrestrial network node or enabling a sleep mode in the apparatus; and during the at least one shared period, perform in accordance with the apparatus switching schedule one or more of: monitoring the signals from the non-terrestrial network node or enabling the sleep mode in the apparatus.

Example embodiments provide an apparatus for a wireless communication system comprising a non-terrestrial network, NTN, the apparatus comprising: means for receiving from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a set of time segments in which the at least one shared period is divided, wherein the activity pattern defines an assignment of each time segment of the set of time segments as an active period to one or more beams of the set of beams, wherein the set of beams cover the non-terrestrial network cell of the non-terrestrial network; means for determining, based on the activity pattern, an apparatus switching schedule that indicates one or more of: monitoring signals from the non-terrestrial network node or enabling a sleep mode in the apparatus; and means for during the at least one shared period, performing in accordance with the apparatus switching schedule one or more of: monitoring the signals from the non-terrestrial network node or enabling the sleep mode in the apparatus.

Example embodiments provide a method comprising: receiving from a non-terrestrial network node of a wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a set of time segments in which the at least one shared period is divided, wherein the activity pattern defines an assignment of each time segment of the set of time segments as an active period to one or more beams of the set of beams, wherein the set of beams cover the non-terrestrial network cell of the non-terrestrial network; determining, based on the activity pattern, an apparatus switching schedule that indicates one or more of: monitoring signals from the non-terrestrial network node or enabling a sleep mode in the apparatus; and during the at least one shared period, performing in accordance with the apparatus switching schedule one or more of: monitoring the signals from the non-terrestrial network node or enabling the sleep mode in the apparatus.

Example embodiments provide a non-transitory computer readable medium comprising program instructions that, when executed by an apparatus, cause the apparatus to perform at least any of the methods described herein.

Example embodiments provide a computer program product comprising processor executable instructions for causing an apparatus to perform any of the methods described herein.

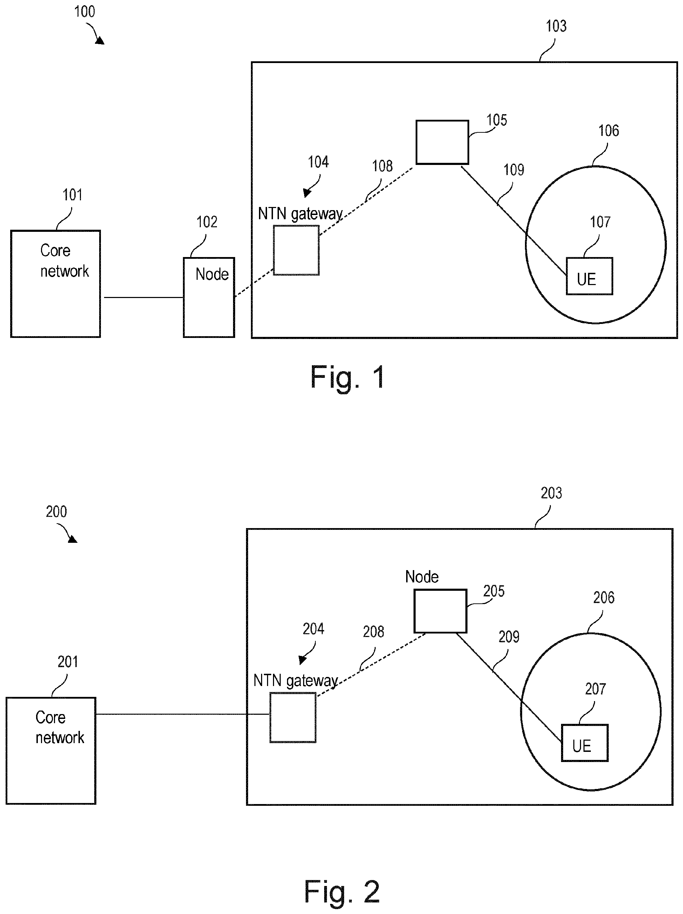

**FIG. 1** illustrates a wireless communication system 100 comprising an NTN architecture according to an example of the present subject matter.

The wireless communication system 100 includes a core network 101, a node 102, an NTN segment 103, and a user equipment (UE) 107. The core network 101 may connect to the node 102 via an NG interface, wherein the node 102 may correspond to a base station entity such as a gNB. The NTN segment 103 may comprise an NTN gateway 104, a satellite 105, and a service coverage area or non-terrestrial network cell 106. The NTN gateway 104 may communicate with the satellite 105 over a feeder link 108, and the satellite 105 may communicate with the UE 107 over a service link 109. The satellite 105 may implement a transparent payload, wherein the satellite 105 may forward communications between the NTN gateway 104 and the UE 107 without terminating the radio interface layer but may perform radio frequency (RF) conversion and amplification. The satellite 105 may be configured to transmit directional beams covering the non-terrestrial network cell 106, wherein a set of beams is formed to serve different areas or users, such as the UE 107. The set of beams may be managed using configuration information including an activity pattern, indicative of activation statuses or active periods of the set of beams over at least one shared period. The activity pattern may be conveyed via configuration information received by the UE 107, for example using RRC signaling or MAC signaling, enabling the UE 107 to optimize its operation, such as switching between wake-up and sleep modes. In one example, the architecture illustrated in FIG. 1 may correspond to a transparent satellite-based NG-RAN deployment, where the satellite 105 may operate as a radio relay without implementing full radio protocol stack functionalities, and where the UE 107 may access the network through beamformed transmissions from the satellite 105 within the coverage of the NTN cell 106.

The satellite 105 may provide an example implementation of the non-terrestrial network node according to the present subject matter.

**FIG. 2** illustrates a wireless communication system 200 comprising an NTN architecture according to an example of the present subject matter.

The wireless communication system 200 includes a core network 201, an NTN segment 203, and a user equipment 207. The core network 201 may, for example, connect to the NTN gateway 204 via an NG interface. The NTN segment 203 may comprise the NTN gateway 204 and a satellite node 205, which may implement a regenerative payload. The NTN gateway 204 may communicate with the satellite node 205 over a feeder link 208, and the satellite node 205 may communicate with the UE 207 over a service link 209. In this architecture, the satellite node 205 may integrate base station functionalities, such as those corresponding to a gNB and may manage the radio access link to the UE 207 directly, unlike in a transparent architecture. The satellite node 205 may transmit directional beams covering the non-terrestrial network cell 206, wherein a set of beams may be deployed for serving different areas or users within the NTN cell 206. The set of beams may be controlled by configuration information comprising an activity pattern, which may indicate active periods of the set of beams over at least one shared period. The activity pattern may be conveyed through configuration signaling, allowing the UE 207 to determine operational behavior, such as switching between monitoring and sleep modes based on the activity pattern.

The activity pattern for a given period may, for example, define a mapping between sub-periods within the shared period and beam activity statuses for the set of beams. Each sub-period may be assigned to one or more beams of the set beams, such that only the designated beams are marked as active during their assigned sub-periods, while other beams are inactive during those same sub-periods. For example, beam A may be active in the first sub-period, beam B in the second, beams C and D in the third, and no beam may be active in the fourth sub-period. For example, the UE 207 may be configured to perform the monitoring of signals on a selected beam of the set of beams. The UE 207 may, for example, be assigned the selected beam by the network, e.g., after a coordination procedure between the UE and the network or be assigned based on predefined configuration. The UE 207 may be configured to use the timing information defined within the activity pattern, corresponding to the selected beam, to derive the apparatus switching schedule. In one example, the apparatus switching schedule may comprise a pattern of sleep and wake-up modes. The pattern of sleep and wake-up modes may correspond on a one-to-one basis with the activity pattern of the selected beam associated with the apparatus, meaning that the UE 207 may enter a wake-up mode during the active periods of the selected beam and a sleep mode during its inactive periods. During the wake-up mode, the UE 207 may perform signal monitoring, which may include, for example, tuning its receiver in accordance with the transmission parameters (e.g., frequency, timing, beam index) of the selected beam to enable reception of signals from the satellite node 205.

The satellite node 205 may provide an example implementation of the non-terrestrial network node according to the present subject matter.

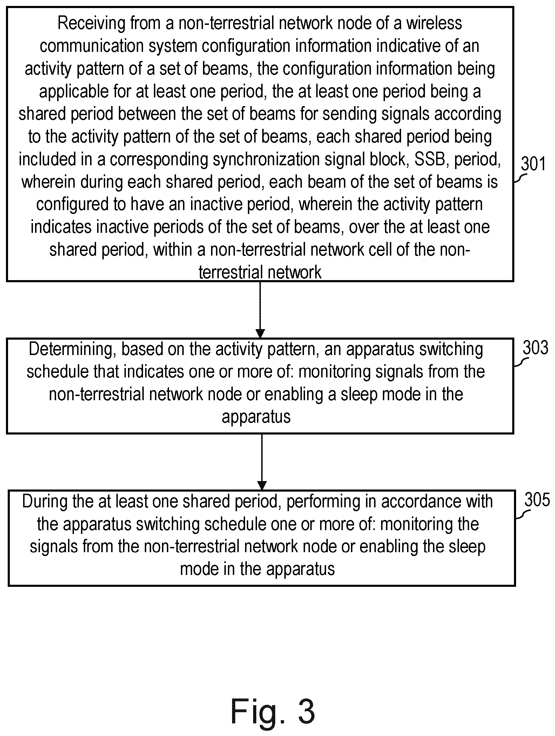

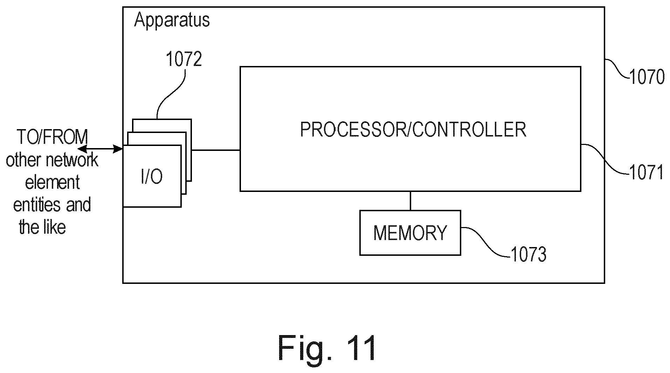

**FIG. 3** is a flowchart of a method in accordance with an example of the present subject matter. The method of FIG. 3 may, for example, be performed by an apparatus such as the UE 107 illustrated and described in reference to FIG. 1, the UE 207 illustrated and described in reference to FIG. 2, or the apparatus illustrated and described in reference to FIG 11.

Configuration information may be received in block 301 from a non-terrestrial network node of the wireless communication system. The configuration information is indicative of an activity pattern of a set of beams, the configuration information being applicable for at least one period, the at least one period being a shared period between the set of beams for sending signals according to the activity pattern of the set of beams, each shared period being included in a corresponding SSB period, wherein during each shared period, each beam of the set of beams is configured to have an inactive period, wherein the activity pattern indicates inactive periods of the set of beams, over the at least one shared period, within a non-terrestrial network cell of the non-terrestrial network.

An apparatus switching schedule may be determined in block 303 based on the activity pattern. The apparatus switching schedule indicates one or more of: monitoring signals from the non-terrestrial network node or enabling a sleep mode in the apparatus.

During the at least one shared period, one or more of: monitoring the signals from the non-terrestrial network node or enabling the sleep mode in the apparatus, may be performed in block 305 in accordance with the apparatus switching schedule.

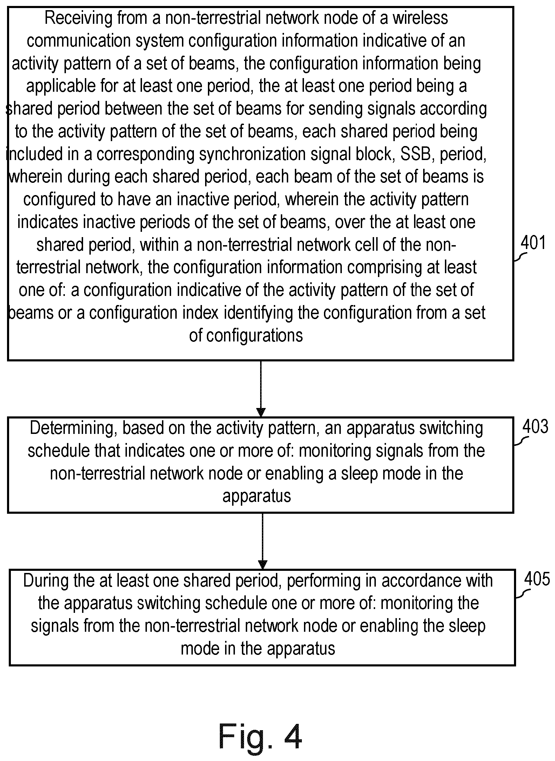

**FIG. 4** is a flowchart of a method in accordance with an example of the present subject matter. The method of FIG. 4 may, for example, be performed by an apparatus such as the UE 107 illustrated and described in reference to FIG. 1, the UE 207 illustrated and described in reference to FIG. 2, or the apparatus illustrated and described in reference to FIG 11.

Configuration information may be received in block 401 from a non-terrestrial network node of the wireless communication system. The configuration information is indicative of an activity pattern of a set of beams, the configuration information being applicable for at least one period, the at least one period being a shared period between the set of beams for sending signals according to the activity pattern of the set of beams, each shared period being included in a corresponding SSB period, wherein during each shared period, each beam of the set of beams is configured to have an inactive period, wherein the activity pattern indicates inactive periods of the set of beams, over the at least one shared period, within a non-terrestrial network cell of the non-terrestrial network. The configuration information comprises at least one of: a configuration indicative of the activity pattern of the set of beams or a configuration index identifying the configuration from a set of configurations.

An apparatus switching schedule may be determined in block 403 based on the activity pattern. The apparatus switching schedule indicates one or more of: monitoring signals from the non-terrestrial network node or enabling a sleep mode in the apparatus.

During the at least one shared period, one or more of: monitoring the signals from the non-terrestrial network node or enabling the sleep mode in the apparatus, may be performed in block 405 in accordance with the apparatus switching schedule.

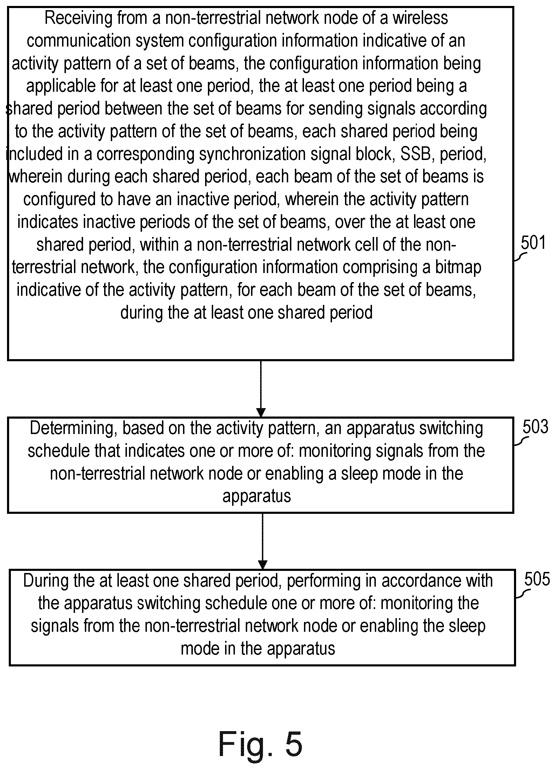

**FIG. 5** is a flowchart of a method in accordance with an example of the present subject matter. The method of FIG. 5 may, for example, be performed by an apparatus such as the UE 107 illustrated and described in reference to FIG. 1, the UE 207 illustrated and described in reference to FIG. 2, or the apparatus illustrated and described in reference to FIG 11.

Configuration information may be received in block 501 from a non-terrestrial network node of the wireless communication system. The configuration information is indicative of an activity pattern of a set of beams, the configuration information being applicable for at least one period, the at least one period being a shared period between the set of beams for sending signals according to the activity pattern of the set of beams, each shared period being included in a corresponding SSB period, wherein during each shared period, each beam of the set of beams is configured to have an inactive period, wherein the activity pattern indicates inactive periods of the set of beams, over the at least one shared period, within a non-terrestrial network cell of the non-terrestrial network. The configuration information comprises a bitmap indicative of the activity pattern, for each beam of the set of beams, during the at least one shared period.

An apparatus switching schedule may be determined in block 503 based on the activity pattern. The apparatus switching schedule indicates one or more of: monitoring signals from the non-terrestrial network node or enabling a sleep mode in the apparatus.

During the at least one shared period, one or more of: monitoring the signals from the non-terrestrial network node or enabling the sleep mode in the apparatus, may be performed in block 505 in accordance with the apparatus switching schedule.

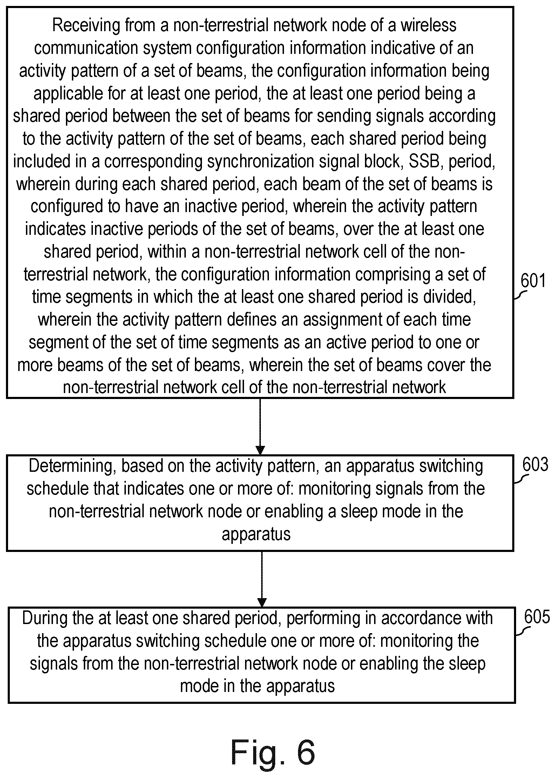

**FIG. 6** is a flowchart of a method in accordance with an example of the present subject matter. The method of FIG. 6 may, for example, be performed by an apparatus such as the UE 107 illustrated and described in reference to FIG. 1, the UE 207 illustrated and described in reference to FIG. 2, or the apparatus illustrated and described in reference to FIG 11.

Configuration information may be received in block 601 from a non-terrestrial network node of the wireless communication system. The configuration information is indicative of an activity pattern of a set of beams, the configuration information being applicable for at least one period, the at least one period being a shared period between the set of beams for sending signals according to the activity pattern of the set of beams, each shared period being included in a corresponding SSB period, wherein during each shared period, wherein each beam of the set of beams is configured to have an inactive period, wherein the activity pattern indicates inactive periods of the set of beams, over the at least one shared period, within a non-terrestrial network cell of the non-terrestrial network. The configuration information comprises a set of time segments in which the at least one shared period is divided, wherein the activity pattern defines an assignment of each time segment of the set of time segments as an active period to one or more beams of the set of beams, wherein the set of beams cover the non-terrestrial network cell of the non-terrestrial network.

An apparatus switching schedule may be determined in block 603 based on the activity pattern. The apparatus switching schedule indicates one or more of: monitoring signals from the non-terrestrial network node or enabling a sleep mode in the apparatus.

During the at least one shared period, one or more of: monitoring the signals from the non-terrestrial network node or enabling the sleep mode in the apparatus, may be performed in block 605 in accordance with the apparatus switching schedule.

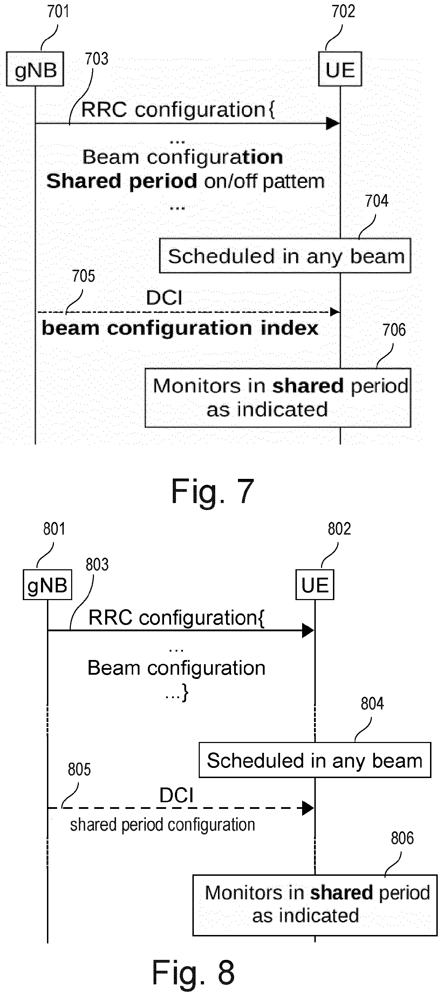

**FIG. 7** illustrates a signaling procedure between a network node 701, such as a gNB, and a user equipment 702 in a wireless communication system comprising an NTN according to an example of the present subject matter.

At step 703, the gNB 701 transmits a RRC configuration message to the UE 702. The RRC configuration message may include a set of configurations, each comprising a shared period on/off pattern indicative of the activity pattern of a set of beams over at least one shared period. Each configuration may enable the UE 702 to determine when beams are active or inactive and to prepare its operational behavior accordingly. After receiving the RRC configuration message, at step 704, the UE 702 may be scheduled on any of the beams based on system needs or service configuration. Subsequently, at step 705, the gNB 701 transmits a downlink control information (DCI) message containing a beam configuration index to the UE 702. The beam configuration index may identify a specific configuration from the set of configurations previously delivered or preconfigured, thus minimizing signaling overhead. Based on the received beam configuration index, at step 706, the UE 702 may monitor the signals from the gNB 701 in the at least one shared period as indicated by the selected configuration such as transitioning between sleep and wake-up modes in accordance with the activity pattern.

In the case where the wireless communication system is provided according to FIG. 1, the lines between the gNB 701 and the UE 702 may be shown logically for illustration purposes; in practice, a satellite is present between the gNB 701 and the UE 702, as illustrated in FIG. 1. In the case where the wireless communication system is provided according to FIG. 2, the gNB 701 may correspond to a satellite-based base station, wherein the content of the signals transmitted from the gNB 701 to the UE 702 may be defined by the core network.

**FIG. 8** illustrates a signaling procedure between a network node 801, such as a gNB, and a user equipment 802 in a wireless communication system comprising an NTN according to an example of the present subject matter.

At step 803, the gNB 801 transmits a RRC configuration message to the UE 802. The RRC configuration message may include beam configuration that may define characteristics such as beam parameters over at least one shared period. Based on the received RRC configuration message, at step 804, the UE 802 may be scheduled on any beam according to service requirements or system procedures. Subsequently, at step 805, the gNB 801 transmits a DCI message containing a shared period configuration to the UE 802. The shared period configuration may indicate an activity pattern of a set of beams. Based on the received shared period configuration, at step 806, the UE 802 may monitor the signals within the at least one shared period in accordance based on the activity pattern, enabling optimized operation, such as selectively monitoring or entering sleep mode based on the activity pattern.

In the case where the wireless communication system is provided according to FIG. 1, the lines between the gNB 801 and the UE 802 may be shown logically for illustration purposes; in practice, a satellite is present between the gNB 801 and the UE 802, as illustrated in FIG. 1. In the case where the wireless communication system is provided according to FIG. 2, the gNB 801 may correspond to a satellite-based base station, wherein the content of the signals transmitted from the gNB 801 to the UE 802 may be defined by the core network.

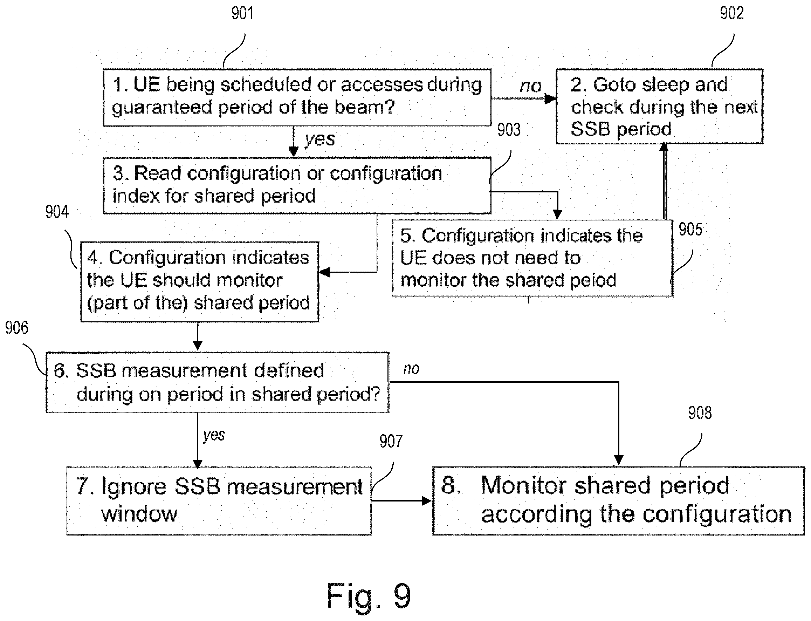

**FIG. 9** illustrates a procedure for the user equipment to select one or more beam configurations according to an example of the present subject matter.

Step 901: A check is performed to determine if the UE is scheduled or accesses during a guaranteed period of the beam. Step 902: If the answer to the check in step 901 is no, the UE can go to sleep (following the normal Discontinuous Transmission/Discontinuous Reception (DTX/DRX) pattern) and wait for the next SSB period.

Step 903: If the answer to the check in step 901 is yes, the UE proceeds to read and use the configuration or configuration index for the shared period. The configuration or configuration index may be provided at the MAC layer (via DCI) to allow maximum flexibility. If a configuration index is used, it may allow the UE to map the received index to a predefined configuration that was previously provided, for example through RRC signaling or a system information block (SIB). Using a configuration index may result in less overhead in DCI signaling but may require the UE to store multiple preconfigured settings. Alternatively, the DCI configuration may provide a shared period on/off pattern, informing the UE when to monitor for scheduling commands, which may simplify UE behavior. The configuration or configuration index may also be semi-statically (re)configured by the wide beam, ensuring that all UEs are aware in advance of scheduling operations and enabling the performance of measurements or operations within the serving beam or neighboring beams.

Step 904: The configuration indicates that the UE should monitor (a part of) the shared period, meaning that it may be scheduled there. Step 905: If the configuration indicates that the UE does not need to monitor the shared period, the UE returns to step 902.

Step 906: Optionally, the UE checks whether a SSB measurement window is defined during the shared period. Step 907: If the SSB measurement window is defined during the shared period, the UE may refrain from the execution of the SSB measurement window if an execution criterion is not fulfilled. The fulfillment of the execution criterion may prioritize the SSB measurement window and associated measurements above monitoring the shared period.

Step 908: the UE monitors the shared period for scheduling commands as indicated by the configuration information.

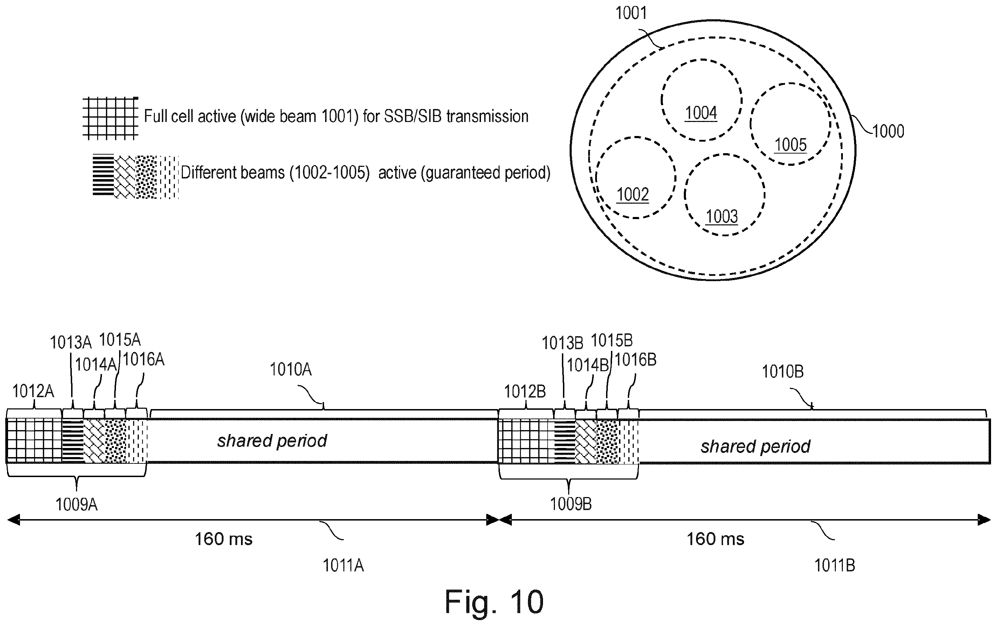

**FIG. 10** illustrates a time-multiplexed beam configuration in a wireless communication system comprising an NTN according to an example of the present subject matter. The configuration pertains to an NTN cell 1000 (such as the cell 106 or 206) covered by a wide beam 1001 and further comprising a set of four narrow beams 1002-1005. The figure shows a temporal structure corresponding to two SSB periods 1011A and 1011B, here each exemplified as being 160 ms long.

Each SSB period 1011A and 1011B may comprise two types of intervals, a first-type interval and a second-type interval. The SSB period 1011A comprises the first-type interval 1009A and the second type interval 1010A. The SSB period 1011B comprises the first-type interval 1009B and the second type interval 1010B. Each of the first-type intervals 1009A and 1009B may be provided at the beginning of the corresponding SSB period 1011A and 1011B to ensure transmission of system information such as synchronization signals and broadcast messages, such that UEs may receive such information and potentially use it to perform, for example, synchronization and initial access. Each of the second-type intervals 1010A and 1010B may provide an example implementation of a shared period according to the present subject matter.

Each of the two first-type intervals 1009A and 1009B comprises a full-cell active period 1012A and 1012B, during which the wide beam 1001 covering the entire cell 1000 is active and a set of guaranteed periods. This full-cell active period 1012A and 1012Bmay be used for transmission of system information such as SSB and may correspond to a period where all four narrow beams 1002 to 1005 within the cell may be inactive. Each of the two first-type intervals 1009A and 1009B may comprise the set of guaranteed periods each represented by distinct shading pattern, where the narrow beams 1002 to 1005 may be activated following the full-cell period 1012A and 1012B. The first type interval 1009A may comprise the set of guaranteed periods 1013A, 1014A, 1015A and 1016A. The first type interval 1009B may comprise the set of guaranteed periods 1013B, 1014B, 1015B and 1016B. Each shading pattern corresponds to a different beam being active among the four narrow beams 1002 to 1005. Although the activation is illustrated as consecutive in time; however, the beams 1002 to 1005 are not necessarily activated sequentially but may instead be active according to a partially overlapping or interleaved schedule. Each guaranteed period may, for example, provide dedicated service access for UEs connected to a respective narrow beam.

Each of the second-type intervals 1010A and 1010B follows the first type intervals 1009A and 1009B respectively. During the shared periods 1010A and 1010B, the four beams within the set of beams 1002-1005 may be associated with an activity pattern of the four beams.

For example, during the guaranteed beam period the UE may be provided with an on/off pattern of each beam of the narrow beams 1002 to 1005 which covers the shared period, i.e. on and off times until the next SSB period starts. Also a start time (frame, slot) may be provided. The UE may be assigned e.g., by the network, one of the narrow beams 1002 to 1005. The UE may then operate in accordance with the on/off pattern associated with the assigned beam. The on/off pattern may be delivered, for instance, as a bitmap, index, or structured field. The UE may, for example, interpret this on/off pattern, compare its current system time to the indicated activity intervals, and determine whether to transition into a sleep mode (if the beam is inactive) or into a wake-up mode to perform signal monitoring (if the beam is active). The UE may follow this and return to the 'normal' DTX/DRX at the start of the next SSB period.

In one example, several on-off patterns may be predefined and provided to the UE through SSB, RRC signaling (or even preconfigured). During the guaranteed period of the beam an index may be provided which points to the on-off pattern to apply until the next SSB period.

The wide beam 1001 may be active during the full-cell periods 1012A and 1012B to enable the UE to acquire synchronization signals, such as those provided through the SSB transmitted via the wide beam 1001. The narrow beams 1002 to 1005 may, for example, be configured through common signaling, such as a SIB, to enable the assignment of the UE to a most suitable narrow beam. This assignment may allow the UE to perform a random access procedure and, subsequently, to monitor signals in accordance with the activity pattern associated with the assigned narrow beam.

For example, the synchronization and initial access procedures may be performed using one or more beams configured for coverage and control signaling, such that the first-type interval, which may, for instance, consist of a full-cell active interval and a set of guaranteed periods, may be defined to precede and complement the shared period. This arrangement may allow the shared period to be explicitly bounded and assigned a specific duration, thereby enabling precise control and determination of the shared period's temporal parameters, such as its start and end. The precise control of the shared period's temporal parameters may enable the apparatus to align its monitoring and sleep behaviors accurately with the activity pattern associated with its assigned beam, thereby avoiding unnecessary signal processing and radio activation. As a result, this may lead to a reduction in energy consumption by minimizing active operation to only those time intervals when communication is required or expected.

In one example implementation, a UE in the non-terrestrial cell 1000 may detect the wide beam 1001 during the full-cell active period 1012A and 1012B, during which the wide beam is active. The wide beam transmits synchronization signals, typically in the form of a SSB, enabling the UE to perform time and frequency synchronization and acquire essential system information. Following synchronization, the UE may be assigned, via common signaling such as a SIB, to one of a set of narrow beams 1002 to 1005 that spatially partition the cell. During a guaranteed beam period associated with the assigned narrow beam, the UE may perform a random access procedure in order to transition to a connected state. The UE may receive configuration information from the network node, which may include, for example, an activity pattern (e.g., as bitmap) indicating the activation status (active or inactive) of each beam in the set of narrow beams 1002 to 1005 over one or more of the shared periods 1010A and 1010B. The UE may use the activity pattern corresponding to its assigned narrow beam to construct an apparatus switching schedule, which defines its operational mode, either monitoring signals from the network node or entering a sleep mode to conserve energy. The activity pattern may provide explicit timing for active and inactive periods, allowing the apparatus switching schedule to govern the UE's monitoring behavior accordingly. During the shared periods 1010A and 1010B, the UE may carry out operations based on the apparatus switching schedule; for example, performing signal monitoring such as control or scheduling reception when the assigned narrow beam is active, or entering sleep mode to suspend monitoring when the narrow beam is inactive.

In **FIG. 11**, a block circuit diagram illustrating a configuration of an apparatus 1070 is shown, which is configured to implement at least part of the present subject matter. The apparatus may be a user equipment. It is to be noted that the apparatus 1070 shown in FIG. 11 may comprise several further elements or functions besides those described herein below, which are omitted herein for the sake of simplicity because they are not essential for the understanding. Furthermore, the apparatus may be also another device having a similar function, such as a chipset, a chip, a module etc., which can also be part of an apparatus or attached as a separate element to the apparatus 1070, or the like. The apparatus 1070 may comprise a processing function or processor, or controller 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and instructions, such as programs to be executed by the processor 1071 and/or as a working storage of the processor 1071.

The processor 1071 is configured to execute processing related to the above described subject matter. In particular, the apparatus 1070 may be configured to perform the method as described in connection with FIG. 3, 4, 5, 6 or 9.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An apparatus for a wireless communication system comprising a non-terrestrial network, NTN, the apparatus comprising at least one processor; and at least one memory storing instructions that, when executed by the at least one processor, cause the apparatus at least to:
receive from a non-terrestrial network node of the wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a bitmap indicative of the activity pattern, for each beam of the set of beams, during the at least one shared period;
determine, based on the activity pattern, an apparatus switching schedule that indicates one or more of: monitoring signals from the non-terrestrial network node or enabling a sleep mode in the apparatus; and
during the at least one shared period, perform in accordance with the apparatus switching schedule one or more of: monitoring the signals from the non-terrestrial network node or enabling the sleep mode in the apparatus.

2. The apparatus of claim 1, the set of beams comprising a serving beam of the apparatus, wherein the instructions, when executed by the at least one processor, further cause the apparatus to determine the apparatus switching schedule in accordance with the activity pattern of the serving beam.

3. The apparatus of claim 2, wherein the instructions, when executed by the at least one processor, further cause the apparatus to:
receive the configuration information, during the at least one shared period, via the serving beam.

4. The apparatus of any of the preceding claims, the set of beams comprising beams for transmission of the SSB, each SSB beam being associated with an index.

5. The apparatus of claim 4, wherein the instructions, when executed by the at least one processor, further cause the apparatus to:
synchronize with the non-terrestrial network in accordance with an SSB beam of the SSB beams; wherein the configuration information is received in accordance with the SSB beam during the synchronization.

6. The apparatus of any of the preceding claims, wherein the instructions, when executed by the at least one processor, further cause the apparatus to transmit data during the at least one shared period based on the apparatus switching schedule.

7. The apparatus of any of the preceding claims, wherein the instructions, when executed by the at least one processor, further cause the apparatus to:
in response to determining that a SSB measurement is scheduled within the at least one shared period and that the SSB measurement and the monitoring cannot be performed simultaneously, determine whether to prioritize the SSB measurement or the monitoring.

8. The apparatus of claim 7, wherein the apparatus is configured to prioritize the SSB measurement in response to determining that an execution criterion is fulfilled, and to otherwise refrain from executing the SSB measurement ; the execution criterion being at least one of the following: more than a configured time has elapsed since a last SSB measurement, or a certain number of previous SSB measurements were refrained from.

9. The apparatus of any of the preceding claims, wherein the instructions, when executed by the at least one processor, further cause the apparatus to:
receive from the non-terrestrial network node a further configuration information indicative of an activity pattern of the set of beams or of another set of beams, the further configuration information being applicable for one or more shared periods subsequent to the at least one shared period;
monitor, during the one or more shared periods, signals form the non-terrestrial network node based on the activity pattern indicated by the further configuration information.

10. The apparatus of any of the preceding claims, the at least one shared period comprising any shared period between the reception of the configuration information and a reception of subsequent configuration information.

11. The apparatus of any of the preceding claims, the at least one shared period comprising an upcoming sequence of a defined number of shared periods.

12. The apparatus of any of the preceding claims, wherein the instructions, when executed by the at least one processor, further cause the apparatus to:
receive the configuration information in one or more messages, each message comprising a radio resource control, RRC, configuration message or a medium access control, MAC, message.

13. The apparatus of any of the preceding claims, wherein the signals from the non-terrestrial network node include at least one of the following: SSB signals, physical downlink control channel, PDCCH, signals, or reference signals.

14. The apparatus of any of the preceding claims, the apparatus being configured to be in an RRC connected state during the at least one shared period.

15. A method comprising:
receiving from a non-terrestrial network node of a wireless communication system configuration information indicative of an activity pattern of a set of beams, the configuration information being applicable for at least one period, the at least one period being a shared period between the set of beams for sending signals according to the activity pattern of the set of beams, each shared period being included in a corresponding synchronization signal block, SSB, period, wherein during each shared period, each beam of the set of beams is configured to have an inactive period, wherein the activity pattern indicates inactive periods of the set of beams, over the at least one shared period, within a non-terrestrial network cell of the non-terrestrial network, the configuration information comprising a bitmap indicative of the activity pattern, for each beam of the set of beams, during the at least one shared period;
determining, based on the activity pattern, an apparatus switching schedule that indicates one or more of: monitoring signals from the non-terrestrial network node or enabling a sleep mode in the apparatus; and
during the at least one shared period, performing in accordance with the apparatus switching schedule one or more of: monitoring the signals from the non-terrestrial network node or enabling the sleep mode in the apparatus.

16. A computer program product comprising processor executable instructions for causing an apparatus for performing the method of claim 15.
